# EUROPÄISCHE PATENTSCHRIFT

(11) **EP 1 433 989 B1**
(45) Veröffentlichungstag und Bekanntmachung des Hinweises auf die Patenterteilung: **10.01.2007**
(21) Anmeldenummer: 03028844.3
(22) Anmeldetag: 16.12.2003
(51) Int. Cl.: F16L 9/18, F16L 59/20

(54) **Vorrichtung zum Transport von mehrphasigen Fluiden**
Device for transport multiphase fluids
Dispositif pour le transport de substances fluides à plusieurs phases

(30) Priorität: 19.12.2002 DE 20219690 U
(43) Veröffentlichungstag der Anmeldung: 30.06.2004
(73) Patentinhaber: ExxonMobil Production Deutschland GbmH, 30659 Hannover (DE); PPS Pipeline Systems GmbH Winter Rohrbau, 49610 Quakenbrück (DE)
(72) Erfinder: Blaschczok, Michael, 49610 Quakenbrück (DE); Steckler, Guido, Dr., 30639 Hannover (DE); Mockenhaupt, Werner, 30639 Hannover (DE)
(74) Vertreter: von Eichel-Streiber, Caspar

(56) Entgegenhaltungen:
- DE-A- 19 709 373
- DE-B- 1 258 215
- GB-A- 2 001 407
- US-A- 3 865 145
- US-A- 4 219 224

## Beschreibung

Die Erfindung bezieht sich auf eine Vorrichtung zum Transport von mehrphasigen Fluiden, insbesondere nassem Sauergas in einem Edelstahlrohr, das innerhalb eines Mantelrohres aus C-Stahl angeordnet ist.

Es ist ein Verfahren und eine Vorrichtung zum Transportieren von nassem Sauergas in einem mit einem Kunststoffrohr ausgekleideten Stahlrohr bekannt (DE 196 15 935 A1), wobei mit einfachen Mitteln die Korrosionserscheinungen bei intakter Leitung nicht auftreten sollen und die Möglichkeit geschaffen sein soll, eine durch Risse in der Kunststoffleitung hervorgerufene verstärkte Permeabilität durch Messung feststellen zu können. Bei der bekannten Vorrichtung wird das Kunststoffrohr an seiner Außenseite mit Nuten versehen, die mit dem Stahlrohr Kanäle bilden, so dass man in diese Kanäle an einem Ende der Transportstrecke ein Inertgas eintreten lassen kann und am anderen Ende der Transportstrecke dieses Inertgas wieder austreten lassen kann. Die Erfahrung hat jedoch gezeigt, dass sich Kunststoff bei solchen Vorrichtungen auf die Dauer nicht bewährt hat und zu Störungen Anlass gegeben hat.

Der Erfindung liegt die Aufgabe zu Grunde, eine Vorrichtung der eingangs genannten Art so auszugestalten, dass eine insgesamt sichere Anlage entsteht, und darüber hinaus auch eine gewisse Überwachbarkeit der Rohrleitung gegeben ist.

Erreicht wird dies bei einer Vorrichtung der eingangs genannten Art dadurch, dass das Edelstahlrohr Druck tragend ausgebildet wird, elektrisch zum äußeren Mantelrohr isoliert sowie unter mechanischer Vorspannung zu diesem Mantelrohr gelagert wird, und dass das Mantelrohr Katodisch geschützt wird.

Das innen liegende Edelstahlrohr übernimmt dabei die Funktion einer druckdichten Rohrleitung, wobei die Vorspannung unterschiedliche Wärmedehnungen zwischen dem Innen- und dem Außenrohr kompensieren kann. Bei der Vorrichtung gemäß der Erfindung gibt es daher im Verlauf einer Leitung Vorspannfestpunkte, durch die die unterschiedlichen Wärmeausdehnungskoeffizienten der verwendeten Materialien berücksichtigt werden können. Zwischen einem C-Stahl und einer Edelstahllegierung können Unterschiede des Wärmeausdehnungskoeffizienten im Bereich von 40 % liegen, die durch die Vorrichtung gemäß der Erfindung kompensiert werden können, und zwar so, dass kein denkbarer Betriebszustand die Vorrichtung gemäß der Erfindung aus dem elastischen Bereich herausführen würde.

Die Rohre müssen in der Vorrichtung gemäß der Erfindung sich nicht geradlinig erstrecken, es können Bogen von 90° oder 180° ohne weiteres verwendet werden.

Durch die elektrische Isolierung zwischen Edelstahlrohr und Mantel ist es möglich, das Mantelrohr kathodisch zu schützen, und zwar insbesondere im Hinblick auf die Werkstoffpaarung C-Stahl mit Edelstahl. Besondere Vorteile der Vorrichtung gemäß der Erfindung sind darin zu sehen, dass hier ein geschlossenes, gekapseltes Rohrsystem gestellt wird, bei dem keine offenen Flanschverbindungen vorhanden sind. Es sind keine Schachtbauwerke erforderlich, da gemäß der Erfindung die eingesetzten Flanschblätter nach innen gerichtet sind. Die Befestigung der Flansche geschieht über Isolierteile, nämlich Isolierhülsen und Isolierscheiben.

Die Erfindung wird nachstehend anhand der Zeichnungen beispielsweise erläutert.

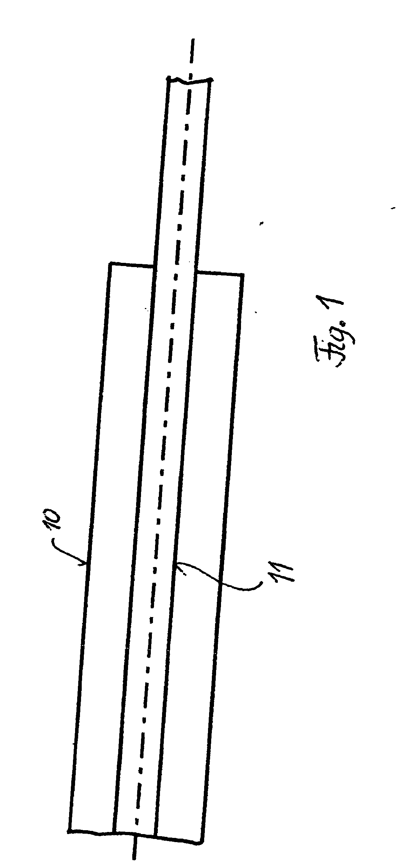

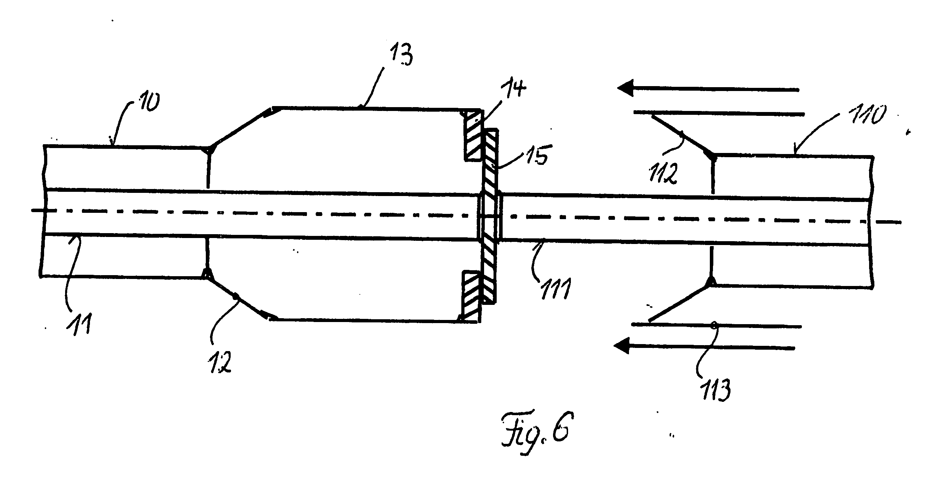

Die Figuren 1 bis 7 zeigen aufeinander folgende Arbeitsstufen im Zusammenhang mit der Errichtung einer Vorrichtung gemäß der Erfindung.

Figur 1 zeigt ein Mantelrohr 10 mit einem darin befindlichen Edelstahlrohr 11 vor der Montage. Der innere Teil, das Edelstahlrohr 11, steht etwas über das Ende des Mantelrohrs 10 hinaus.

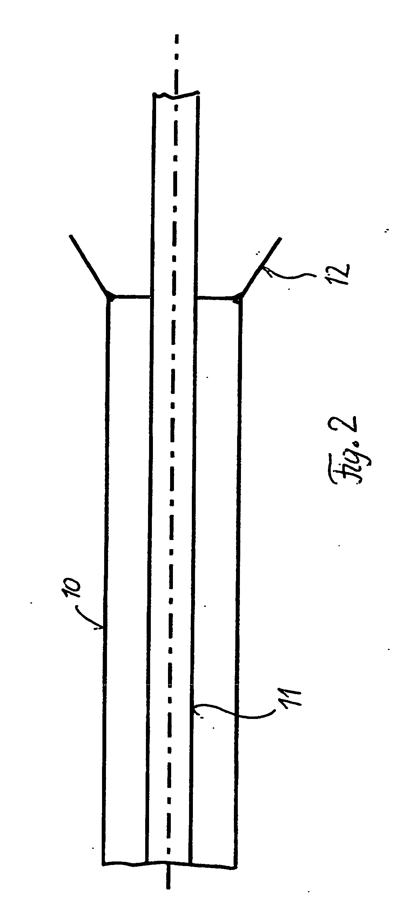

Figur 2 zeigt, wie eine Aufweitung 12 an das Mantelrohr 10 angeschweißt worden ist.

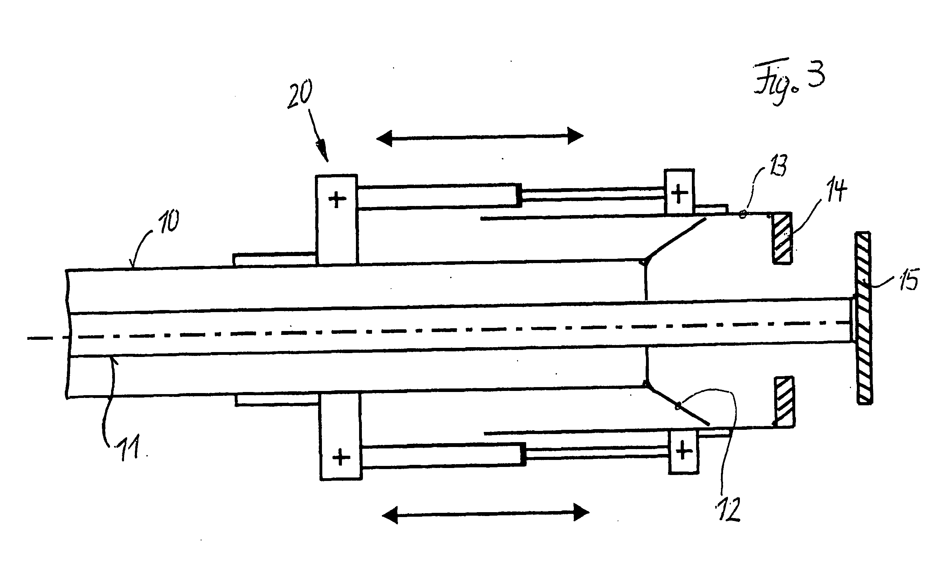

Figur 3 lässt erkennen, wie eine Hydraulikeinrichtung 20 im Zusammenhang mit der Montage eingesetzt werden kann. Der eine Teil eines Hydraulikstempels ist auf dem Äußeren des Mantelrohrs 10 befestigt. In Figur 3 sind zwei ausfahrbare Stempel zu erkennen, die wiederum mit entsprechenden Befestigungsmitteln auf dem äußeren Teil eines Überschiebers 13 zusammenarbeiten. Diese Überschieber haben einen etwas größeren Durchmesser als die Abmessung des Aufweitungsteils 12 und sind mit einem nach innen gerichteten Flansch 14 versehen.

Auch das Innenrohr 11 ist mit einem Flansch 15 versehen.

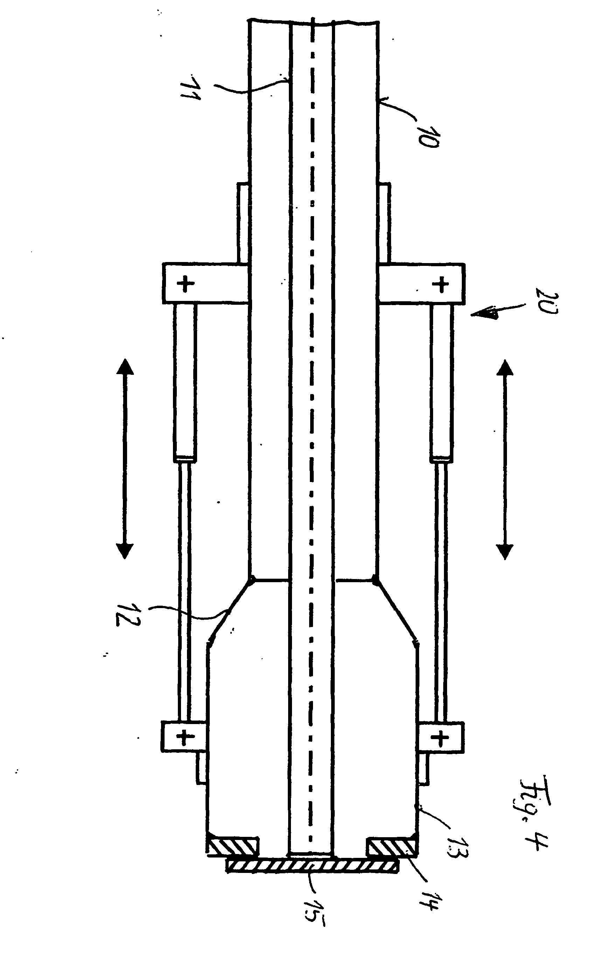

Figur 4 zeigt den Zustand, der eintritt, nachdem die Hydraulikstempel der Vorspanneinrichtung 20 ausgefahren sind. In dieser Position können die Teile 12 und 13 miteinander verschweißt werden. Nach Beendigung dieses Vorgangs können die einzelnen Teile der Vorspanneinrichtung 20 entfernt werden, und in dieser Position ist die gewünschte Vorspannung zwischen dem Mantelrohr 10 und dem Edelstahlrohr 11 realisiert worden, weil der Flansch 15 des Rohres 11 an dem Flansch 14 des Aufweitungsteils 13 anliegt.

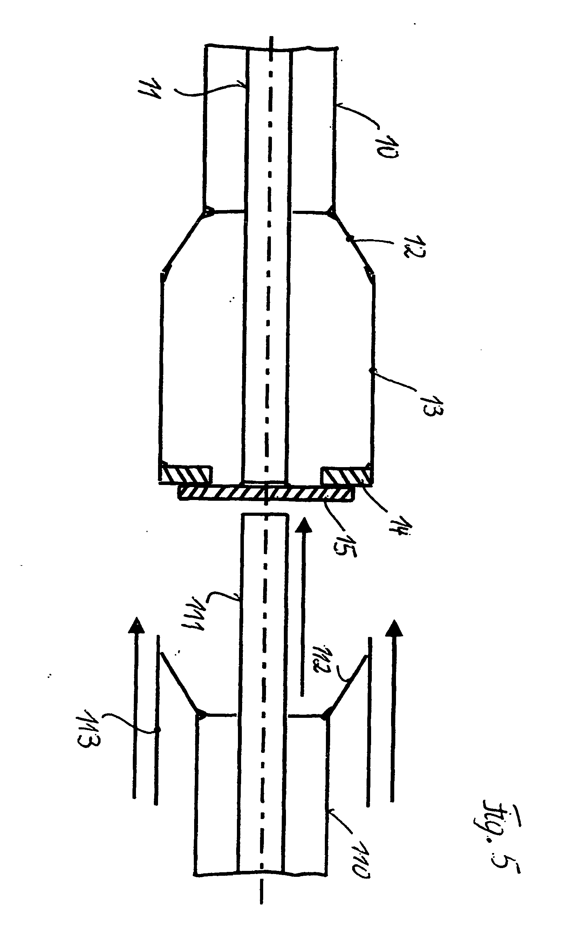

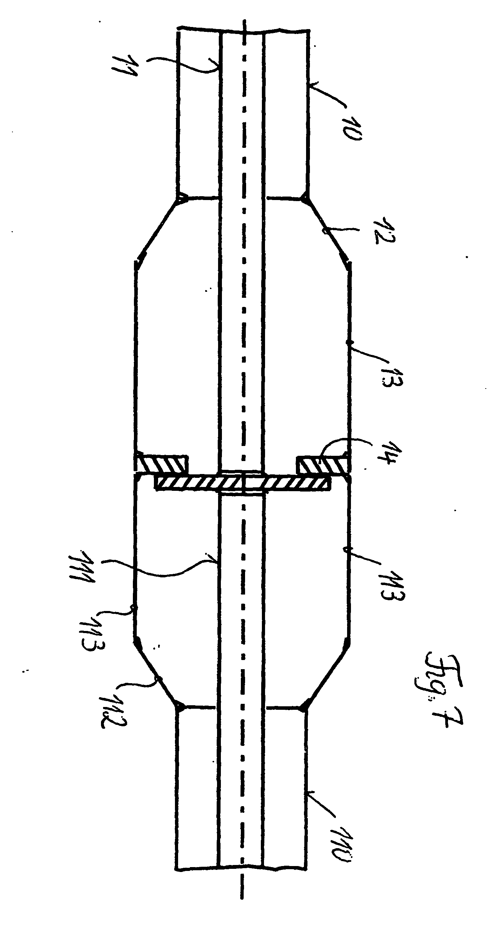

Nun wird die Verbindung mit dem anderen Rohrstück in den Figuren 5 bis 7 gezeigt, wobei entsprechende Teile die gleiche Bezugszahl, angereichert mit der Zahl 100, zeigen. In Figur 7 ist der Endzustand zu erkennen.

## Patentansprüche

1. Vorrichtung zum Transport von mehrphasigen Fluiden, nämlich von nassem Sauergas, mit einem Innenrohr (11, 111) aus Edelstahl, und einem Mantelrohr (10,110), wobei das Innenrohr (11,111) innerhalb des Mantelrohres (10, 110) aus C-Stahl angeordnet ist, und wobei das Innenrohr (11, 111) drucktragend ausgebildet, elektrisch zum äußeren Mantelrohr (10, 110) isoliert ist, **dadurch gekennzeichnet, dass** das Innenrohr (11,111) unter mechanischer Vorspannung zu diesem Mantelrohr (10, 110) gelagert ist, und dass das Mantelrohr (10, 110) durch die gegenüber dem Innenrohr (11,111) gegebene elektrische Isolierung im Hinblick auf die Werkstoffpaarung C-Stahl mit Edelstahl kathodisch geschützt ist.

2. Vorrichtung nach Anspruch 1, **dadurch gekennzeichnet, dass** an den Enden des Innenrohres (11) angeschweißte Flansche (15) mit nach innen weisenden Befestigungsflanschen (14) in Erweiterungsstücken (13) des Mantelrohres (10) lösbar verbunden sind.

3. Vorrichtung nach Anspruch 2, **dadurch gekennzeichnet, dass** die Befestigung der Flansche (14, 15) über Isolierhülsen und Isolierscheiben erfolgt.

4. Vorrichtung nach Anspruch 2, **dadurch gekennzeichnet, dass** der entstehende Ringraum zwischen Mantel- (10, 110) und Innenrohr (11, 111) zur Verbesserung der Überwachung und Anlagensicherheit durch die Flanschverbindung(en) hindurch und somit auf ganzer Rohrleitungslänge spülbar ist.

## Claims

1. Device for transporting multiphase fluids, namely wet sour gas, having an inner pipe (11, 111) made from high-grade steel and a jacket pipe (10, 110), in which the inner pipe (11, 111) is placed within the carbon steel jacket pipe (10, 110) and in which the inner pipe (11, 111) is constructed in pressure-bearing manner and is electrically insulated with respect to the outer jacket pipe (10, 110), **characterized in that** the inner pipe (11, 111) is mounted under mechanical pretension with respect to the jacket pipe (10, 110) and that the jacket pipe (10, 110) is cathodically protected by the electrical insulation against inner pipe (11, 111) with respect to the material pairing of carbon steel and high-grade steel.

2. Device according to claim 1, **characterized in that** flanges (15) welded to the ends of the inner pipe (11) are detachably connected to inwardly directed mounting flanges (14) in extension pieces (13) of jacket pipe (10).

3. Device according to claim 2, **characterized in that** mounting of flanges (14, 15) takes place by means of insulating washers and insulating sheaths.

4. Device according to claim 2, **characterized in that** the annular space between jacket pipe (10, 110) and inner pipe (11, 111) improves the monitoring and plant security through the flanged coupling(s) and is consequently flushable over the entire pipeline length.

## Revendications

1. Dispositif de transport de fluides polyphasiques, à savoir de gaz acide mouillé, comportant un tube intérieur (11, 111) en acier spécial et un tube d'enveloppe (10, 110), le tube intérieur (11, 111) étant disposé à l'intérieur du tube d'enveloppe (10, 110) en acier au carbone, et le tube intérieur (11, 111) étant agencé de façon à supporter la pression, et étant isolé électriquement par rapport au tube d'enveloppe (10, 110) extérieur, **caractérisé en ce que** le tube intérieur (11, 111) est monté sous précontrainte mécanique par rapport à ce tube d'enveloppe (10, 110), et **en ce que**, moyennant l'isolation électrique assurée par rapport au tube intérieur (11, 111), le tube d'enveloppe (10, 110) est protégé du point de vue cathodique eu égard à l'appariement des matériaux acier au carbone et acier spécial.

2. Dispositif selon la revendication 1, **caractérisé en ce que** des brides (15) soudées sur les extrémités du tube intérieur (11), avec des brides de fixation (14) orientées vers l'intérieur, sont reliées de façon amovible dans des pièces d'élargissement (13) du tube d'enveloppe (10).

3. Dispositif selon la revendication 2, **caractérisé en ce que** la fixation des brides (14, 15) est effectuée par l'intermédiaire de douilles isolantes et de disques isolants.

4. Dispositif selon la revendication 2, **caractérisé en ce que** l'espace annulaire engendré entre le tube d'enveloppe (10, 110) et le tube intérieur (11, 111) peut être balayé à travers la (les) liaison(s) à bride, et par conséquent sur la totalité de la longueur de la tuyauterie, afin d'améliorer la surveillance et la sécurité de l'installation.
